# EUROPÄISCHE PATENTSCHRIFT

(11) **EP 0 270 062 B1**
(45) Veröffentlichungstag und Bekanntmachung des Hinweises auf die Patenterteilung: **02.03.1994**
(21) Anmeldenummer: 87117702.8
(22) Anmeldetag: 30.11.1987
(51) Int. Cl.: H04N 3/08, G01B 11/02

(54) **Bildaufnahmevorrichtung**
Image pick-up device
Dispositif de prise d'image

(30) Priorität: 03.12.1986 DE 3641258
(43) Veröffentlichungstag der Anmeldung: 08.06.1988
(73) Patentinhaber: Erwin Sick GmbH Optik-Elektronik, D-79183 Waldkirch (DE)
(72) Erfinder: Fetzer, Günter, D-7803 Gundelfingen (DE); Hippenmeyer, Heinrich, D-7831 Freiamt (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 031 973
- US-A- 4 613 910
- PATENT ABSTRACTS OF JAPAN, Band 10, Nr. 305 (P-507)[2361], 17. Oktober 1986; & JP-A-61 120 007 (HITACHI LTD) 07-06-1986
- PROCEEDINGS OOF THE I.E.E.E., Band 70, Nr. 6, Juni 1982, IEEE, New York, US; T.R. PRYOR et al.: "Applications of lasers to production metrology, control, and machine "Vision""

## Beschreibung

Die Erfindung betrifft eine Bildaufnahmevorrichtung nach dem Oberbegriff des Patentanspruchs 1.

Mit einer bekannten Bildaufnahmevorrichtung dieser Art (US-PS 4 613 910) werden stehende Bilder abgetastet und die daraus gewonnenen Lichtsignale in Videosignale umgewandelt. Auf einer optischen Achse sind nacheinander eine Lichtquelle, eine Sammellinse, ein das Bild darstellendes Diapositiv und ein Farbfilter angeordnet. Ein anschließender Schwingspiegel reflektiert das auftreffende Licht um etwa 90° zu einem Bildaufnahmegerät, welches eine Linse, ein Schlitzelement und eine Diodenzeilenanordnung umfaßt. Durch Drehschwingbewegung des Spiegels können verschiedene Streifen des Bildes nacheinander auf die Diodenzeilenanordnung projiziert werden, welche ihrerseits die Streifen in Längsrichtung abtastet. Da der Schwingspiegel periodisch seine Drehrichtung ändert, sind wegen der trägen Masse des Schwingspiegels die erzielbaren Abtastgeschwindigkeiten begrenzt. Das Diapositiv muß exakt in der Bildebene angeordnet sein.

Weiter ist eine Meßvorrichtung (EP-A 0 031 973) bekannt, mit welcher die Abmessungen eines Objektes translationsinvariant ermittelt werden sollen. Auf einer optischen Achse sind nacheinander eine Lichtquelle, ein Zerstreuungsschirm, eine erste Linse, ein Objekt, eine zweite Linse, ein Objektiv und eine Videobildaufnahmeröhre angeordnet. Das zwischen den einen telezentrischen Strahlengang bildenden Linsen angeordnete Objekt soll dabei mit größerer Tiefenschärfe abgebildet werden.

Außerdem ist schon eine Vorrichtung zur Beschleunigung der Aufnahme von flachen Mustern unter Verwendung eines Spiegelrades bekannt (JP-61-120007). Der Abstand des Spiegelrades von einer Halbleiterzeile ist dabei relativ groß, weil zwischen dem Spiegelrad und der Halbleiterzeile ein halbdurchlässiger Spiegel angeordnet ist, über den das Beleuchtungslicht für den abzutastenden Gegenstand in den Strahlengang eingekoppelt wird.

Das Ziel der vorliegenden Erfindung besteht darin, eine Bildaufnahmevorrichtung der eingangs genannten Gattung zu schaffen, bei der die hohe Auflösungs- und Verarbeitungsgeschwindigkeit einer Halbleiterzeilenkamera voll benutzt werden kann, ohne daß Präzisionsprobleme bei der Relativverschiebung zwischen dem Bild des Objektes und der Halbleiterzeile auftreten, wobei eine große Tiefenschärfe und nur eine geringe Abstandsabhängigkeit bei der Bildaufnahme vorliegen soll, ohne daß der bauliche Aufwand für die optischen Bauelemente übermäßig hoch wird.

Zur Lösung dieser Aufgabe sind die Merkmale des kennzeichnenden Teils des Patentspruchs 1 vorgesehen.

Im Gegensatz zu einem Schwingspiegel läßt sich die spiegelnde Fläche eines Spiegelrades wesentlich näher am Objektiv anordnen, wodurch Abbildungsverzerrungen minimiert werden können, zumal zwischen dem Spiegelrad und dem Objektiv keine weiteren optischen Bauteile angeordnet sind.

Die Ausbildung nach den Ansprüchen 2 oder 3 hat den Vorteil, daß die Sende- und die Empfangsoptik problemlos der flächenmäßigen Ausdehnung des aufzunehmenden Objektes selbst dann angepaßt werden kann, wenn dieses relativ groß ist.

Vorteilhafte Ausgestaltungen der Auswerteelektronik der erfindungsgemäßen Bildaufnahmevorrichtung sind durch den Anspruch 4 gekennzeichnet.

Die Anordnung nach Anspruch 5 ist z. B. dann vorteilhaft, wenn nur die Kontur, d.h. das Schattenbild, des Objektes bewertet werden soll.

Die Erfindung wird im folgenden beispielsweise anhand der Zeichnung beschrieben, in dieser zeigt:
- Fig. 1: eine schematische perspektivische und blockschaltbildartige Darstellung einer mit einem telezentrischen Strahlengang arbeitenden Ausführungsform der erfindugsgemäßen Bildaufnahmevorrichtung,
- Fig. 2: eine Draufsicht einer mit einem telezentrischen Strahlengang und Hohlspiegeln arbeitenden Ausführungsform einer erfindungsgemäßen Bildaufnahmevorrichtung, und
- Fig. 3: einen schematischen Schnitt nach Linie IV-IV in Fig. 2.

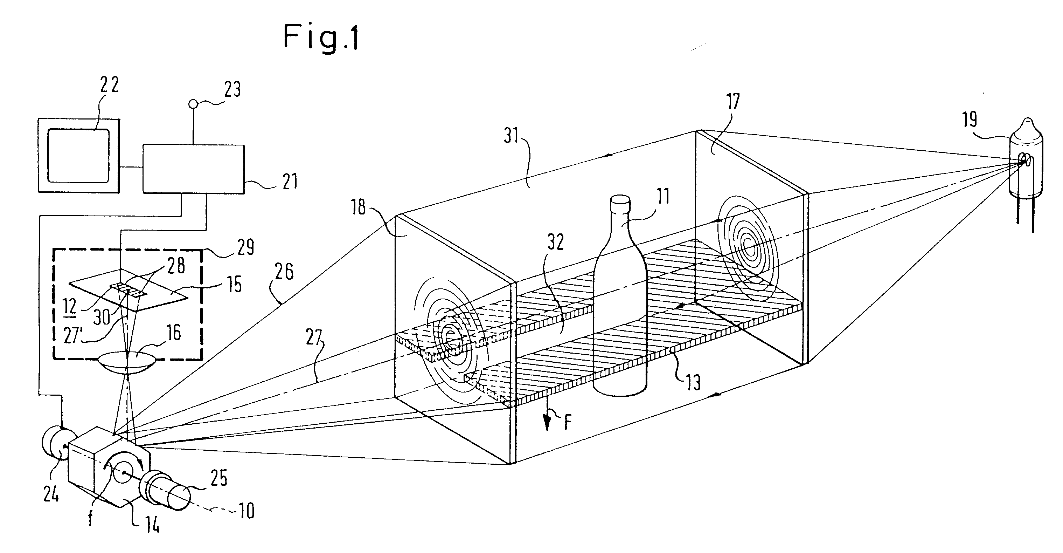

Nach Fig. 1 ist eine als Glühlampe ausgebildete Lichtquelle 19 im Brennpunkt einer als Fresnel-Linse ausgebildeten Sendeoptik 17 angeordnet, aus der ein paralleles Lichtbündel 31 austritt. In einem deutlichen Abstand von der Sendeopatik 17 ist parallel dazu eine die gleiche Flächengröße aufweisende Empfangsoptik 18 angeordnet, die beim Ausführungsbeispiel nach Fig. 1 ebenfalls als Fresnel-Linse ausgebildet ist.

Ein streifenförmiger Ausschnitt 13 eines voluminösen Objektes 11, nämlich einer Flasche, wird über eine Spiegelfläche eines Spiegelrades 14 und ein unter einem Winkel zum Eintrittslichtbündel 26 angeordnetes Objektiv 16 auf einer Halbleiterzeile 12 abgebildet, die sich in einer senkrecht zur optischen Achse 27' des Objektes 16 erstreckenden Bildebene 15 befindet. Die Drehachse 10 des Spiegelrades 14 steht senkrecht auf der Reflexionsebene, die durch die optischen Achsen 27, 27' der Optiken 17, 18 und des Objektivs 16 definiert ist.

Der Brennpunkt der Empfangsoptik 18 befindet sich optisch im Objektiv 16. Das Objektiv 16 und die Diodenzeile 12 sind zu einer Halbleiterzeilenkamera 29 zusammengefaßt, die in Fig. 1 durch gestrichelte Linien angedeutet ist. Auf diese Weise wird das gesamte Licht des parallelen Lichtbündels 31 in das Innere der Diodenzeilenkamera 29 geleitet.

Das durch die Bildaufnahmevorrichtung gemäß Fig. 1 aufzunehmende Objekt 11, im vorliegenden Fall eine Flasche, wird zwischen der Sendeoptik 17 und der Empfangsoptik 18 angeordnet. In jedem Augenblick wird lediglich ein streifenförmiger Ausschnitt 13 auf die Diodenzeile 12 abgebildet, wobei dieser streifenförmige Ausschnitt 13 in Richtung des Pfeiles F eine wiederholte Abtastbewegung über die gesamte Höhe des parallelen Lichtbündels 31 ausführt. Hinter der das Objekt darstellenden Flasche ist eine Unterbrechung 32 des streifenförmigen Ausschnitts 13 zu erkennen, welche andeuten soll, daß in diesem Bereich das Licht durch die eingestellte Flasche 11 unterbrochen oder geschwächt ist.

Das Spiegelrad 14 wird von einem Antriebsmotor 25 zu einer kontinuierlichen Drehbewegung in Richtung des Pfeiles f angetrieben. Auf der Drehachse ist auch ein Winkelsensor 24 angeordnet, der ebenso wie die Halbleiterzeile 12 an eine Auswerte- und Abfragelektronik 21 angeschlossen ist. Die Auswerte- und Abfrageelektronik 21 speist einen Bildschirmmonitor 22 und einen Auswahlsignalanschluß 23.

Die Halbleiterzeile 12 besteht aus einer Reihe unmittelbar nebeneinander angeordneter lichtempfindlicher Einzelelemente 28. Der streifenförmige Ausschnitt 13 auf dem Objekt 11 stimmt mit dem Bild überein, welches das Objektiv 16 von der Diodenzeile 12 in der Ebene des Objektes 11 entwirft.

Die Schwächung des streifenförmigen Ausschnitts 13 durch das Objekt 11 wird von der Auswerte- und Abfrageelektronik 21 erkannt und in ein Signal für die Dicke bzw. die Form des Objektes umgesetzt.

Aufgrund des telezentrischen Strahlengangs nach Fig. 1 hat der streifenförmige Ausschnitt 13 nicht nur eine Ausdehnung in Quer-, sondern auch in Längsrichtung zwischen den Optiken 17, 18, wodurch angedeutet wird, daß die Tiefenschärfe der Anordnung sehr groß ist. Außerdem ist die Empfindlichkeit gegen unterschiedliche Abstände des Objektes 11 von der Halbleiterzeilenkamera 29 erheblich herabgesetzt.

Die optische Achse 27' der Diodenzeilenkamera 29 trifft auf die Mitte 30 der Bildebene 15 und durchstößt außerdem die in der Bildebene 15 ortsfest angeordnete Halbleiterzeile 12 in deren Mitte.

Die Halbleiterzeile 12 nach Fig. 1 sieht also in jedem Augenblick gerade denjenigen streifenförmigen Ausschnitt 13 des Objekts 11, der durch das Spiegelrad 14 und das Objektiv 16 auf sie projiziert wird.

Obwohl also sowohl das Objekt 11 als auch die Halbleiter- oder Diodenzeile 12 sowie die Halbleiterzeilenkamera 29 ortsfest angeordnet sind, tastet die Halbleiterzeile 12 kontinuierlich nicht nur die streifenförmigen Ausschnitte 13 in ihrer Querrichtung schrittweise nacheinander ab, sondern erfaßt in schrittweise aufeinanderfolgenden zeitlichen Schritten auch die senkrecht zur Ebene des Ausschnittes 13 in Richtung des Pfeiles F aufeinanderfolgenden streifenförmigen Ausschnitte entsprechend der Drehzahl des Spiegelrades 14.

In der Auswerte- und Abfrageelektronik 21 steht somit eine vollständige Information über sämtliche Bildpunkte des Objektes 11 zur Verfügung, die beispielsweise zu einem vollständigen Bild des Objektes 11 zusammengesetzt und auf einem Bildschirmmonitor 22 sichtbar gemacht werden kann. Bevorzugt werden jedoch die einzelnen Bildpunktsignale nach irgendwelchen Kriterien, z.B. nach Fehlerkriterien, ausgewertet, und es erscheint an einem Auswahlsignalanschluß 23 ein Signal, welches entscheidet, ob das Objekt 11 fehlerhaft ist oder nicht.

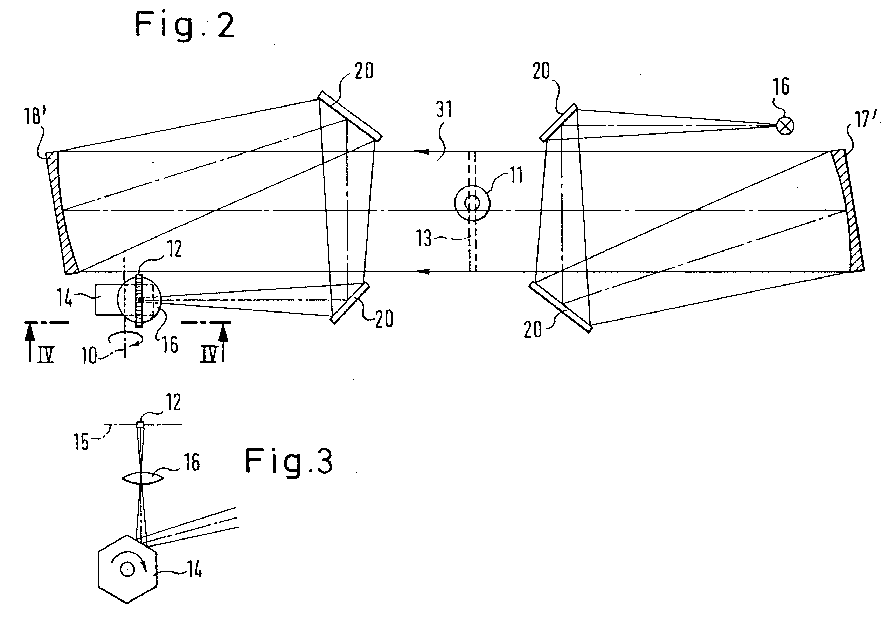

In den Fig. 2 und 3 bezeichnen gleiche Bezugszahlen entsprechende Teile wie in Fig. 1. In den Fig. 2 und 3 sind jedoch die elektrischen und elektronischen Teile für den Antrieb des Spiegelrades 14 und die Auswertung nicht dargestellt. Diese Teile sind entsprechend Fig. 1 ausgebildet.

Bei dem Ausführungsbeispiel nach Fig. 2 sind die Sende- und Empfangsoptik 17' bzw. 18' als Hohlspiegel ausgebildet, wozu das Licht von der Lichtquelle 16 durch einen oder mehrere plane Umlenkspiegel 20 schräg von der Vorderseite auf den Sende-Hohlspiegel 17' gerichtet ist. Der Empfangs-Hohlspiegel 18' sendet schräg zum Parallellichtbündel 31 ein Lichtbündel über zwei weitere plane Umlenkspiegel 20 zum Spiegelrad 14, von wo aus der optische Strahlengang grundsätzlich genauso verläuft wie beim Ausführungsbeispiel nach Fig. 1.

Sowohl durch die Hohlspiegel 17', 18' als auch durch die Fresnel-Linsen 17, 18 nach Fig. 1 können flächenmäßig sehr stark ausgedehnte Bereiche gleichmäßig ausgeleuchtet werden, wie das zur flächenmäßigen Bildabtastung größerer Gegenstände wie Flaschen usw. erforderlich ist.

Eine noch verbleibende Rest-Unschärfe bei der Abbildung kann durch Reduzierung des Öffnungsverhältnisses des Objektivs klein gehalten werden. Aufgrund des beschriebenen telezentrischen Strahlengangs gemäß den Fig. 1 bis 3 ist nun jedoch die Lichtausbeute des Beleuchtungsstrahlenganges wesentlich höher als bei diffuser Beleuchtung im Auflicht, so daß das Öffnungsverhältnis des Objektivs 16 sehr klein gehalten werden kann, was die Erzielung einer großen Tiefenschärfe bedeutet.

## Patentansprüche

1. Bildaufnahmevorrichtung mit einer das aufzunehmende Objekt (11) beleuchtenden Lichtquelle (19), einer lichtempfindlichen Halbleiterzeile (12) und einem Objektiv (16), welches einen streifenförmigen Ausschnitt (13) aus dem Objekt (11) auf die Halbleiterzeile (12) abbildet, wobei zwischen der Halbleiterzeile (12) und dem darauf befindlichen Bild des streifenförmigen Ausschnitts (13) in Richtung senkrecht zur Längserstreckung der Zeile und in der Bildebene eine Relativbewegung stattfindet, derart, daß in zeitlich nacheinander erfolgenden Schritten größere Bereiche des Objektes (11) bzw. das ganze Objekt (11) von der Halbleiterzeile (12) erfaßt wird, wobei zwischen dem Objekt (11) und dem Objektiv (16) eine das Bild des streifenförmigen Ausschnitts (13) in Richtung senkrecht zur Längserstreckung der Halbleiterzeile (12) und in der Bildebene (15) fortlaufend verschiebende Lichtablenkvorrichtung (14) angeordnet ist, dadurch gekennzeichnet, daß das Objekt (11) in einem telezentrischen Strahlengang angeordnet ist, der in das Objektiv (16) konzentriert ist, indem das Objekt (11) zwischen einer Sendeoptik (17, 17') und einer Empfangsoptik (18, 18') angeordnet ist, wobei der Brennpunkt der Sendeoptik (17, 17') in oder nahe der Lichtquelle (19) oder einem Bild derselben und der Brennpunkt der Empfangsoptik (18, 18') im oder nahe dem Objektiv (16) angeordnet ist, daß die Lichtablenkvorrichtung ein Spiegelrad (14) ist und daß sich das Spiegelrad (14) zwischen der Empfangsoptik (18, 18') und dem Objektiv (16) nahe dem Objektiv (16) befindet.

2. Vorrichtung nach Anspruch 1, dadurch gekennzeichnet, daß die Sendeoptik und/oder die Empfangsoptik aus Fresnel-Linsen (17, 18) besteht.

3. Vorrichtung nach Anspruch 2, dadurch gekennzeichnet, daß die Sendeoptik und/oder Empfangsoptik aus Hohlspiegeln (17, 18) besteht.

4. Vorrichtung nach einem der vorhergehenden Ansprüche, dadurch gekennzeichnet, daß die Halbleiterzeile (12) und ein Winkelsensor (24), der ein für den momentanen Lichtablenkwinkel der Lichtablenkvorrichtung (14) repäsentatives elektrisches Signal liefert, an eine Auswerte- und Abfrageelektronik (21) angeschlossen sind, welche die empfangene Bildinformation auswertet, und daß insbesondere durch entsprechende Weiterverarbeitung der Zeilenausleseimpulse die Ansteuerimpulse eines für den Antrieb der Lichtablenkvorrichtung (14) vorgesehenen Schrittmotors (25) gebildet werden, so daß eine zwangsweise Synchronisation zwischen Zeilenabtast- und Bildwechselfrequenz erreicht wird.

5. Vorrichtung nach einem der vorhergehenden Ansprüche, dadurch gekennzeichnet, daß sie in Transmission arbeitet, d.h. die eingebrachten Gegenstände das Lichtbündel zumindest teilweise abschwächen oder unterbrechen.

## Claims

1. Picture recording apparatus comprising a light source (19) which illuminates the object (11) to be recorded, a light sensitive semiconductor row (12) and an objective (16) which forms an image of a strip-like section (13) of the object (11) on the semiconductor row (12), wherein a relative movement takes place between the semiconductor row (12) and the image of the strip-like section (13) located thereon, in a direction perpendicular to the longitudinal extent of the row and in the image plane, in such a way that larger regions of the object (11) or the whole object (11) is detected by the semiconductor row (12) in sequential time steps, wherein a light deflecting device (14) which continuously displaces the image of the strip-like section (13) in a direction perpendicular to the longitudinal extent of the semiconductor row (12) and in the image plane (15) is arranged between the object (11) and the objective (16),
**characterized in that**
the object (11) is arranged in a telecentric beam path which is concentrated into the objective (16) by the object (11) being arranged between an optical transmitting system (17,17') and an optical receiving system (18,18') with the focal point of the optical transmitting system (17,17') being arranged in or close to the light source (19) or an image thereof and with the focal point of the optical receiving system (18,18') being arranged in or near to the objective (16), in that the light deflecting device is a mirror wheel (14) and in that the mirror wheel (14) is located between the optical receiving system (18,18') and the objective (16) close to the objective (16).

2. Apparatus in accordance with claim 1, characterized in that the optical transmitting system and/or the optical receiving system consist of Fresnel lenses (17,18).

3. Apparatus in accordance with claim 2, characterized in that the optical transmitting system and/or the optical receiving system consist of concave mirrors (17,18).

4. Apparatus in accordance with one of the preceding claims, characterized in that the semiconductor row (12) and an angle sensor (24), which delivers an electrical signal representative of the instantaneous light deflection angle of the light deflecting device (14), are connected to processing and interrogation electronics (21) which evaluates the picture information received, and in that the control pulses for a stepper motor (25) provided for the drive of the light deflecting apparatus (14) are formed by appropriate further processing of the line read-out pulses, so that an automatic synchronization between the line scanning frequency and the image change frequency is achieved.

5. Apparatus in accordance with one of the preceding claims, characterized in that it operates in transmission, i.e. the objects introduced at least partially attenuate or interrupt the light beam.

## Revendications

1. Appareil de prise de vues avec une source lumineuse (19) illuminant l'objet (11) à photographier, une rangée de semi-conducteurs (12) photosensibles et un objectif (16), lequel forme l'image d'un tronçon en forme de bande (13) de l'objet (11) sur la rangée de semi-conducteurs (12), et dans lequel entre la rangée de semi-conducteurs (12) et l'image du tronçon (13) en forme de bande située sur cette rangée se produit un mouvement relatif dans une direction perpendiculaire à l'extension longitudinale de la rangée et dans le plan image, de telle manière que lors des pas effectués successivement dans le temps des régions plus importantes de l'objet (11), ou l'objet entier (11) sont saisies par la rangée de semi-conducteurs (12), et entre l'objet (11) et l'objectif (16) est agencé un dispositif de déflexion de la lumière (14) qui décale en continu l'image du tronçon en forme de bande (13) dans une direction perpendiculaire à l'extension longitudinale de la rangée de semi-conducteurs (12) et dans le plan image (15), caractérisé en ce que l'objet (11) est agencé dans un trajet de faisceau télécentrique qui est concentré dans l'objectif (16), du fait que l'objet (11) est agencé entre une optique d'émission (17, 17') et une optique de réception (18, 18'), et le foyer de l'optique d'émission (17, 17') est agencé dans ou proche de la source lumineuse (19) ou d'une image de celle-ci, et le foyer de l'optique de réception (18, 18') est agencé dans ou proche de l'objectif (16), en ce que le dispositif de déflexion de la lumière est une roue à miroirs (14), et en ce que la roue à miroirs (14) se trouve entre l'optique de réception (18, 18') et l'objectif (16) au voisinage de l'objectif (16).

2. Dispositif selon la revendication 1, caractérisé en ce que l'optique d'émission et/ou l'optique de réception est constituée par des lentilles Fresnel (17, 18).

3. Dispositif selon la revendication 2, caractérisé en ce que l'optique d'émission et/ou l'optique de réception est constituée par des miroirs concaves (17, 18).

4. Dispositif selon l'une des précédentes revendications, caractérisé en ce que la rangée de semi-conducteurs (12) et un détecteur angulaire (24), qui délivre un signal électrique représentatif de l'angle de déflexion instantané de la lumière du dispositif de déflexion de la lumière (14), sont raccordés à un système électronique d'évaluation et d'interrogation (21), lequel évalue les informations d'image reçues, et en ce que notamment par un traitement ultérieur correspondant des impulsions de lecture des lignes on forme les impulsions de commande d'un moteur pas-à-pas (25) prévu pour l'entraînement du dispositif de déflexion de la lumière (14), de sorte qu'une synchronisation forcée est atteinte entre la fréquence de balayage des lignes et la fréquence de changement d'images.

5. Dispositif selon l'une des précédentes revendications, caractérisé en ce qu'il travaille en transmission, c'est-à-dire que les objets introduits affaiblissent ou interrompent le faisceau lumineux au moins partiellement.
